(19) Europäisches Patentamt / European Patent Office / Office européen des brevets

(11) EP 4 593 147 A1

(12) # EUROPEAN PATENT APPLICATION

published in accordance with Art. 153(4) EPC

(43) Date of publication:
**30.07.2025 Bulletin 2025/31**

(21) Application number: **23913904.1**

(22) Date of filing: **03.01.2023**

(51) International Patent Classification (IPC):
***H01M 10/0567*** *(2010.01)* ***H01M 10/052*** *(2010.01)*
***H01M 6/16*** *(2006.01)* ***H01G 9/035*** *(2006.01)*
***H01G 11/64*** *(2013.01)*

(52) Cooperative Patent Classification (CPC):
**H01M 10/0567;** H01G 9/035; H01G 11/64;
H01M 6/16; H01M 10/052; Y02E 60/10

(86) International application number:
**PCT/CN2023/070096**

(87) International publication number:
**WO 2024/145741 (11.07.2024 Gazette 2024/28)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Contemporary Amperex Technology (Hong Kong) Limited**
**Central (HK)**

(72) Inventors:
- **ZHANG, Cuiping**
  **Ningde City, Fujian 352100 (CN)**
- **HAN, Changlong**
  **Ningde City, Fujian 352100 (CN)**
- **JIANG, Bin**
  **Ningde City, Fujian 352100 (CN)**

(74) Representative: **Jacob, Reuben Ellis et al**
**Maucher Jenkins**
**Seventh Floor Offices**
**Artillery House**
**11-19 Artillery Row**
**London SW1P 1RT (GB)**

(54) **ELECTROLYTE, BATTERY, AND ELECTRICAL DEVICE**

(57) The present application provides an electrolyte, a battery, and an electrical device. The electrolyte of the present application comprises a first additive represented by formula (I), wherein R is selected from one or more of halogen and MO-, and M is selected as an alkali metal. According to the electrolyte of the present application, the erosion of HF on cathode and anode SEI films can be inhibited, the redox reaction between the electrolyte and an anode or a cathode is reduced, the consumption of active lithium is reduced, the decomposition of a solvent in the electrolyte is inhibited, the amount of gas produced during the decomposition of the solvent is reduced, the cycle and storage performance of a secondary battery is improved, and the volume expansion and impedance of a battery cell are decreased.

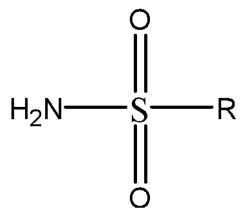

(I)

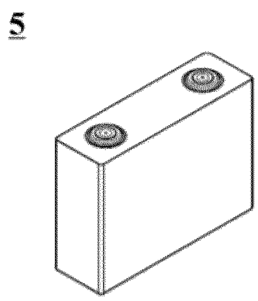

FIG. 1

EP 4 593 147 A1

## Description

## TECHNICAL FIELD

This application relates to the field of battery technologies, and in particular, to an electrolyte, a battery, and an electric apparatus.

## BACKGROUND

In recent years, with increasingly wide use of secondary batteries, secondary batteries have been widely used in energy storage power supply systems such as hydroelectric, thermal, wind, and solar power plants, and many other fields including electric tools, electric bicycles, electric motorcycles, electric vehicles, military equipment, and aerospace. Due to great development of secondary batteries, higher requirements are imposed on energy density, cycling performance, safety performance, and the like of secondary batteries.

The fluorine-containing electrolytic salt in the electrolyte used in the battery hydrolyzes at high temperature to generate HF, which easily erodes the SEI film on the electrode plate, leading to problems such as increased consumption of active lithium, increased impedance and volume swelling of the battery cell, and deteriorated cycling performance and storage performance of the battery. Therefore, it is urgent to solve these problems currently.

## SUMMARY

This application is made in view of the foregoing issues, and is intended to provide an electrolyte, a battery, and an electric apparatus. The electrolyte of this application can reduce erosion of a SEI film on an electrode plate by HF generated from a fluorine-containing electrolytic salt through hydrolysis, and reduce consumption of active lithium, improving cycling performance and storage performance of a secondary battery, and reducing impedance and volume swelling of a battery cell.

To achieve the foregoing objective, a first aspect of this application provides an electrolyte including a first additive represented by formula (I);

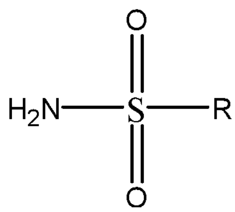

(I)

where
R is selected from one or more of halogen and MO-; and M is selected from alkali metal.

In the electrolyte of this application, the first additive can inhibit erosion of SEI films on cathode and anode by HF generated from a fluorine-containing electrolytic salt through hydrolysis, reduce redox reactions between the electrolyte and the anode or cathode, and in turn reduce consumption of active lithium, improving cycling performance of a secondary battery. The first additive can also reduce decomposition of solvents in the electrolyte induced by HF, and reduce the amount of gas generated from the solvent decomposition, reducing volume swelling and impedance of a battery cell, thereby improving storage performance of the secondary battery.

In any embodiment, R is selected from one or more of F and MO-; and/or M is selected from one or more of lithium, sodium, potassium, rubidium, and cesium;

optionally, M is selected from one or more of lithium, sodium, and potassium; and
more optionally, M is lithium.

In any embodiment, the first additive is selected from one or more of lithium sulfamate, aminosulfonyl fluoride, sodium sulfamate, and potassium sulfamate; and
optionally, the first additive is selected from one or more of lithium sulfamate and aminosulfonyl fluoride.

Thus, the first additive can further inhibit the erosion of the SEI film on the anode or cathode by HF and reduce the consumption of active lithium, further improving the cycling performance of the secondary battery, and can further reduce

the volume swelling and impedance of the battery cell, further improving the storage performance of the secondary battery.

In any embodiment, a mass content of the first additive in the electrolyte is less than or equal to 3.5%, optionally 10 ppm to 3.5%, more optionally 10 ppm to 3%, further optionally 500 ppm to 1%, and more further optionally 0.1% to 1%.

The first additive within the foregoing content range can further improve the cycling performance and storage performance of the secondary battery, and further reduce the impedance of the battery cell.

In any embodiment, the electrolyte further includes a second additive represented by formula (II) or formula (III),

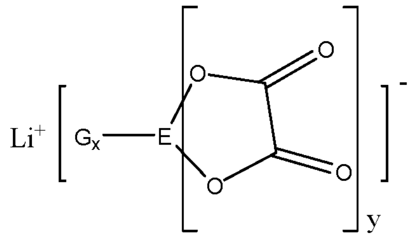

(II)

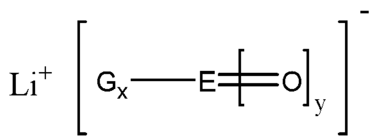

(III)

where

Es in formula (II) and formula (III) are each independently selected from one or more of phosphorus and boron; and
Gs in formula (II) and formula (III) are each independently selected from halogen;
and
when E is phosphorus, x is 2 and y is 2;
when E in formula (II) is boron, x is 4 and y is 0, or x is 2 and y is 1; and
when E in formula (III) is boron, x is 4 and y is 0.

Both the second additive and the first additive being used can further reduce the impedance of the battery cell, and further reduce the swelling rate of the battery cell, thereby further improving the cycling performance and storage performance of the secondary battery.

In any embodiment, Gs in formula (II) and formula (III) are each independently F.

In any embodiment, the second additive is selected from one or more of lithium difluorophosphate, lithium difluorobis(oxalato)phosphate, lithium tetrafluoroborate, and lithium difluoro(oxalato)borate; and
optionally, the second additive is selected from one or more of lithium difluorophosphate, lithium tetrafluoroborate, and lithium difluoro(oxalato)borate.

The second additive being used in combination with the first additive can further reduce the impedance and volume swelling of the battery cell, improving the cycling performance and storage performance of the secondary battery.

In any embodiment, a mass content of the second additive in the electrolyte is less than or equal to 2.3%, optionally 100 ppm to 2.3%, more optionally 100 ppm to 2%, and further optionally 0.1% to 1%.

The content of the second additive within the foregoing range is conducive to further improving the cycling performance and storage performance of the secondary battery.

In any embodiment, a ratio of a mass content of the second additive in the electrolyte to a mass content of the first additive in the electrolyte is 0.1 to 500, optionally 0.5 to 12, and more optionally 0.5 to 10. Thus, a battery with good comprehensive performance can be obtained.

In any embodiment, the electrolyte further includes an electrolytic salt, where the electrolytic salt is selected from one or more of $LiPF_6$, lithium bis(fluorosulfonyl)imide, lithium fluorosulfonate, lithium fluorosulfonyl(trifluoromethylsulfonyl)imide, and lithium bis(pentafluoroethylsulfonyl)imide, and optionally selected from one or more of $LiPF_6$ and lithium bis(fluorosulfonyl)imide.

The first additive and the optional second additive have more significant improvement effect on the electrolyte system containing the foregoing electrolytic salt, which can further improve the cycling performance and storage performance of the secondary battery, and further reduce the volume swelling and impedance of the battery cell.

A second aspect of this application further provides a battery including the electrolyte according to the first aspect of this application.

Thus, in the electrolyte of this application, the first additive can inhibit erosion of SEI films on cathode and anode by HF generated from a fluorine-containing electrolytic salt through hydrolysis, reduce redox reactions between the electrolyte and the anode or cathode, and in turn reduce consumption of active lithium, improving cycling performance of a secondary battery. The first additive can also reduce decomposition of solvents in the electrolyte induced by HF, and reduce the amount of gas generated from the solvent decomposition, reducing volume swelling and impedance of a battery cell, thereby improving storage performance of the secondary battery.

A third aspect of this application provides an electric apparatus including the battery according to the second aspect of this application.

## BRIEF DESCRIPTION OF DRAWINGS

FIG. 1 is a schematic diagram of a secondary battery according to an embodiment of this application.
FIG. 2 is an exploded view of the secondary battery according to the embodiment of this application shown in FIG. 1.
FIG. 3 is a schematic diagram of a battery module according to an embodiment of this application.
FIG. 4 is a schematic diagram of a battery pack according to an embodiment of this application.
FIG. 5 is an exploded view of the battery pack according to the embodiment of this application shown in FIG. 4.
FIG. 6 is a schematic diagram of an electric apparatus using a secondary battery as a power source according to an embodiment of this application.

Reference signs are described as follows:
1. battery pack; 2. upper box body; 3. lower box body; 4. battery module; 5. secondary battery; 51. housing; 52. electrode assembly; and 53. cover plate.

## DESCRIPTION OF EMBODIMENTS

The following specifically discloses in detail embodiments of the electrolyte, battery, and electric apparatus of this application, with appropriate reference to the accompanying drawings. However, there may be cases in which unnecessary detailed descriptions are omitted. For example, detailed descriptions of well-known matters and repeated descriptions of actually identical structures have been omitted. This is to avoid unnecessarily prolonging the following descriptions, for ease of understanding by persons skilled in the art. In addition, the accompanying drawings and the following descriptions are provided for persons skilled in the art to fully understand this application and are not intended to limit the subject matter recorded in the claims.

"Ranges" disclosed in this application are defined in the form of lower and upper limits. A given range is defined by one lower limit and one upper limit selected, where the selected lower and upper limits define boundaries of that particular range. Ranges defined in this method may or may not include end values, and any combinations may be used, meaning any lower limit may be combined with any upper limit to form a range. For example, if ranges of 60-120 and 80-110 are provided for a specific parameter, it is understood that ranges of 60-110 and 80-120 can also be envisioned. In addition, if minimum values of a range are given as 1 and 2, and maximum values of the range are given as 3, 4, and 5, the following ranges can all be envisioned: 1-3, 1-4, 1-5, 2-3, 2-4, and 2-5. In this application, unless otherwise stated, a value range of "a-b" is a short representation of any combination of real numbers between a and b, where both a and b are real numbers. For example, a value range of "0-5" means that all real numbers in the range of "0-5" are listed herein, and "0-5" is just a short representation of a combination of these values. In addition, a parameter expressed as an integer greater than or equal to 2 is equivalent to disclosure that the parameter is, for example, an integer among 2, 3, 4, 5, 6, 7, 8, 9, 10, 11, 12, and so on.

Unless otherwise stated, all the embodiments and optional embodiments of this application can be combined with each other to form new technical solutions.

Unless otherwise stated, all the technical features and optional technical features of this application can be combined with each other to form new technical solutions.

Unless otherwise stated, all the steps in this application can be performed in the order described or in random order, preferably, in the order described. For example, a method including steps (a) and (b) indicates that the method may include steps (a) and (b) performed in order or may include steps (b) and (a) performed in order. For example, the foregoing method may further include step (c), which indicates that step (c) may be added to the method in any ordinal position, for example, the method may include steps (a), (b), and (c), steps (a), (c), and (b), steps (c), (a), and (b), or the like.

Unless otherwise stated, "include" and "contain" mentioned in this application are inclusive or may be exclusive.

For example, the terms "include" and "contain" can mean that other unlisted components may also be included or contained, or only listed components are included or contained.

Unless otherwise stated, in this application, the term "or" is inclusive. For example, a phrase "A or B" means "A, B, or both A and B". More specifically, any one of the following conditions satisfies the condition "A or B": A is true (or present) and B is false (or not present); A is false (or not present) and B is true (or present); or both A and B are true (or present).

Unless otherwise stated, in this application, the term "halogen" is a general term of elements in group VIIA of the periodic table, including fluorine (F), chlorine (Cl), bromine (Br), iodine (I), astatine (At), and the like.

Unless otherwise stated, in this application, the term "alkali metal" refers to metal elements excluding hydrogen in group IA of the periodic table, including lithium (Li), sodium (Na), potassium (K), rubidium (Rb), cesium (Cs), and the like.

[Secondary battery]

The secondary battery, also referred to as a rechargeable battery or a storage battery, is a battery that can be charged after being discharged to activate active materials for continuous use.

Generally, the secondary battery includes a positive electrode plate, a negative electrode plate, a separator, and an electrolyte. During charging and discharging of the battery, active ions (for example, lithium ions) are intercalated and deintercalated between the positive electrode plate and the negative electrode plate. The separator is disposed between the positive electrode plate and the negative electrode plate to mainly prevent short circuit between positive and negative electrodes and to allow the active ions to pass through. The electrolyte is between the positive electrode plate and the negative electrode plate to mainly conduct the active ions.

[Electrolyte]

An embodiment of this application provides an electrolyte including a first additive represented by formula (I);

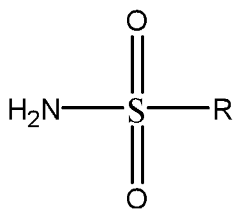

(I)

where

R is selected from one or more of halogen and MO-; and M is selected from alkali metal.

A fluorine-containing electrolytic salt in the electrolyte generates HF through hydrolysis or the like, which erodes SEI films on anode and cathode. After the SEI films are eroded, the exposed anode material or cathode material easily undergoes redox reactions with the electrolyte, which causes excessive consumption of active lithium, deteriorating cycling performance and storage performance of the secondary battery. In addition, HF induces decomposition of solvents in the electrolyte to generate gas, leading to increased volume swelling and impedance of a battery cell, thereby deteriorating high-temperature storage performance of the secondary battery.

In the electrolyte of this application, the amino group in the first additive can bind with HF generated through hydrolysis, and the sulfonic acid group can participate in film formation, which inhibits the erosion of the SEI film on the anode or cathode by HF, suppresses the redox reactions between the electrolyte and the anode material or cathode material, and reduces the consumption of active lithium, improving the cycling performance and storage performance of the secondary battery. In addition, the binding of the amino group in the first additive with HF can inhibit the gas generation caused by the solvent decomposition, and reduce the volume swelling and impedance of the battery cell, further improving the high-temperature storage performance of the secondary battery.

In some embodiments, R is selected from one or more of F and MO-; and/or M is selected from one or more of lithium, sodium, potassium, rubidium, and cesium;

optionally, M is selected from one or more of lithium, sodium, and potassium; and
more optionally, M is lithium.

In some embodiments, the first additive is selected from one or more of lithium sulfamate, aminosulfonyl fluoride, sodium sulfamate, and potassium sulfamate; and

optionally, the first additive is selected from one or more of lithium sulfamate and aminosulfonyl fluoride.

The first additive can further inhibit the erosion of the SEI film on the anode or cathode by HF and reduce the consumption of active lithium, further improving the cycling performance of the secondary battery, and can further reduce the volume swelling and impedance of the battery cell, further improving the storage performance of the secondary battery.

In this application, lithium sulfamate, aminosulfonyl fluoride, sodium sulfamate, and potassium sulfamate sequentially have the following structures:

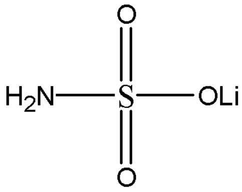,
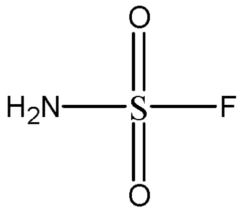,
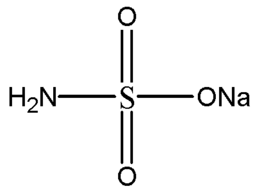,

and

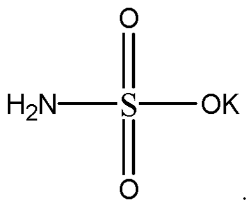.

In some embodiments, a mass content of the first additive in the electrolyte is less than or equal to 3.5%, optionally 10 ppm to 3.5%, more optionally 10 ppm to 3%, further optionally 500 ppm to 1%, and more further optionally 0.1% to 1%. For example, the mass content of the first additive in the electrolyte is 10 ppm, 500 ppm, 0.1%, 0.5%, 1%, 3%, 3.5%, or within a range defined by any two of these values.

Thus, the first additive within the foregoing content range can further improve the cycling performance and storage performance of the secondary battery, and further reduce the impedance of the battery cell.

In some embodiments, the electrolyte further includes a second additive represented by formula (II) or formula (III),

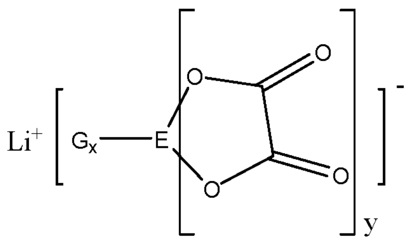

(II)

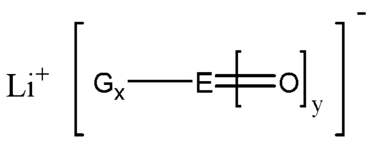

(III)

where

Es in formula (II) and formula (III) are each independently selected from one or more of phosphorus and boron; and
Gs in formula (II) and formula (III) are each independently selected from halogen;
and
when E is phosphorus, x is 2 and y is 2;

when E in formula (II) is boron, x is 4 and y is 0, or x is 2 and y is 1; and
when E in formula (III) is boron, x is 4 and y is 0.

Because the first additive easily deposits by-products on the anode surface when participating in film formation, the impedance at the anode interface increases, leading to increased impedance of the battery cell. Compared with the first additive, the second additive can preferentially form a film at the anode interface, which reduces the impact of the by-products from the first additive on the impedance at the anode interface, further reducing the impedance of the battery cell, and further reducing the swelling rate of the battery cell, thereby improving the cycling performance and storage performance of the secondary battery.

In any embodiment, Gs in formula (II) and formula (III) are each independently F.

In some embodiments, the second additive is selected from one or more of lithium difluorophosphate, lithium difluorobis(oxalato)phosphate, lithium tetrafluoroborate, and lithium difluoro(oxalato)borate; and
optionally, the second additive is selected from one or more of lithium difluorophosphate, lithium tetrafluoroborate, and lithium difluoro(oxalato)borate.

Both the second additive and the first additive being used can further reduce the impedance of the battery cell, and further reduce the swelling rate of the battery cell, thereby further improving the cycling performance and storage performance of the secondary battery.

In this application, lithium difluorophosphate, lithium difluorobis(oxalato)phosphate, lithium tetrafluoroborate, and lithium difluoro(oxalato)borate sequentially have the following structures:

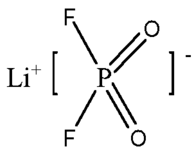 , 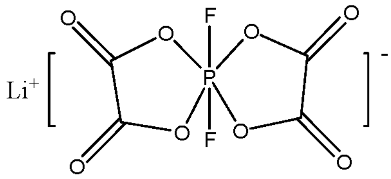 ,

$Li^+[BF_4]^-$, and

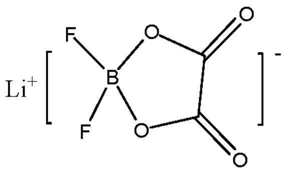 .

In some embodiments, a mass content of the second additive in the electrolyte is less than or equal to 2.3%, optionally 100 ppm to 2.3%, more optionally 100 ppm to 2%, and further optionally 0.1% to 1%. For example, the mass content of the second additive in the electrolyte is 100 ppm, 0.1%, 0.3%, 0.5%, 1%, 1.2%, 2%, 2.3%, or within a range defined by any two of these values.

The content of the second additive within the foregoing range is conducive to further improving the cycling performance and storage performance of the secondary battery.

In some embodiments, a ratio of a mass content of the second additive in the electrolyte to a mass content of the first additive in the electrolyte is 0.1 to 500, optionally 0.5 to 12, and more optionally 0.5 to 10. For example, the ratio is 0.1, 0.2, 0.5, 1, 3, 4, 4.6, 5, 10, 12, 500, or within a range defined by any two of these values. Thus, a battery with good comprehensive performance can be obtained.

The electrolyte conducts ions between the positive electrode plate and the negative electrode plate. For example, the electrolyte may be in a liquid state, a gel state, or an all-solid state.

In some embodiments, the electrolyte is in a liquid state and includes an electrolytic salt and a solvent.

In some embodiments, the electrolytic salt is selected from one or more of $LiPF_6$, lithium bis(fluorosulfonyl)imide, lithium fluorosulfonate, lithium fluorosulfonyl(trifluoromethylsulfonyl)imide, and lithium bis(pentafluoroethylsulfonyl) imide, optionally selected from one or two of $LiPF_6$ and lithium bis(fluorosulfonyl)imide, and more optionally $LiPF_6$.

The first additive and the optional second additive have more significant improvement effect on the electrolyte system containing the foregoing electrolytic salt, which can further improve the cycling performance and storage performance of the secondary battery, and further reduce the volume swelling and impedance of the battery cell.

In some embodiments, the solvent may be selected from at least one of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate,

propyl acetate, methyl propionate, ethyl propionate, propyl propionate, methyl butyrate, ethyl butyrate, 1,4-butyrolactone, sulfolane, methyl sulfonyl methane, ethyl methanesulfonate, or diethyl sulfone.

In some embodiments, the electrolyte further optionally includes other additives. For example, the electrolyte may further include an additive for improving overcharge resistance of the secondary battery, an additive for improving high-temperature or low-temperature performance of the secondary battery, and the like.

In some embodiments, a mass content of water in the electrolyte does not exceed 50 ppm, and optionally does not exceed 20 ppm.

In some embodiments, conductivity of the electrolyte is within the range of 7 mS/cm to 15 mS/cm.

In some embodiments, a low-temperature freezing point of the electrolyte at standard atmospheric pressure is within the range of -80°C to -20°C.

[Positive electrode plate]

The positive electrode plate typically includes a positive electrode current collector and a positive electrode film layer disposed on at least one surface of the positive electrode current collector, where the positive electrode film layer includes a positive electrode active material.

For example, the positive electrode current collector includes two opposite surfaces in its thickness direction, and the positive electrode film layer is disposed on either or both of the two opposite surfaces of the positive electrode current collector.

In some embodiments, the positive electrode current collector may be a metal foil current collector or a composite current collector. For example, an aluminum foil may be used as the metal foil. The composite current collector may include a polymer material matrix and a metal layer formed on at least one surface of the polymer material matrix. The composite current collector may be formed by forming a metal material (aluminum, aluminum alloy, nickel, nickel alloy, titanium, titanium alloy, silver, silver alloy, or the like) on the polymer material matrix (for example, matrices of polypropylene (PP), polyethylene terephthalate (PET), polybutylene terephthalate (PBT), polystyrene (PS), and polyethylene (PE)).

In some embodiments, the positive electrode active material may be a positive electrode active material well known in the art and used for batteries. For example, the positive electrode active material may include at least one of the following materials: olivine-structured lithium-containing phosphate, lithium transition metal oxide, and respective modified compounds thereof. However, this application is not limited to these materials, but may use other conventional materials that can be used as positive electrode active materials for batteries instead. One of these positive electrode active materials may be used alone, or more than two of them may be used in combination. Examples of the lithium transition metal oxide may include but are not limited to at least one of lithium cobalt oxide (for example, $LiCoO_2$), lithium nickel oxide (for example, $LiNiO_2$), lithium manganese oxide (for example, $LiMnO_2$ and $LiMn_2O_4$), lithium nickel cobalt oxide, lithium manganese cobalt oxide, lithium nickel manganese oxide, lithium nickel cobalt manganese oxide (for example, $LiNi_{1/3}Co_{1/3}Mn_{1/3}O_2$ (NCM333 for short), $LiNi_{0.5}Co_{0.2}Mn_{0.3}O_2$ (NCM523 for short), $LiNi_{0.5}Co_{0.25}Mn_{0.25}O_2$ (NCM211 for short), $LiNi_{0.6}Co_{0.2}Mn_{0.2}O_2$ (NCM622 for short), and $LiNi_{0.8}Co_{0.1}Mn_{0.1}O_2$ (NCM811 for short)), lithium nickel cobalt aluminum oxide (for example, $LiNi_{0.85}Co_{0.15}Al_{0.05}O_2$), and modified compounds thereof. Examples of the olivine-structured lithium-containing phosphate may include but are not limited to at least one of lithium iron phosphate (for example, $LiFePO_4$ (LFP for short)), a composite material of lithium iron phosphate and carbon, lithium manganese phosphate (for example, $LiMnPO_4$), a composite material of lithium manganese phosphate and carbon, lithium manganese iron phosphate, and a composite material of lithium manganese iron phosphate and carbon.

In some embodiments, the positive electrode film layer further optionally includes a binder. For example, the binder may include at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorine-containing acrylic resin.

In some embodiments, the positive electrode film layer further optionally includes a conductive agent. For example, the conductive agent may include at least one of superconducting carbon, acetylene black, carbon black, Ketjen black, carbon dots, carbon nanotubes, graphene, and carbon nanofiber.

In some embodiments, the positive electrode plate may be prepared in the following manner: the foregoing constituents used for preparing the positive electrode plate, for example, the positive electrode active material, the conductive agent, the binder, and any other constituent, are dispersed in a solvent (for example, N-methylpyrrolidone) to produce a positive electrode slurry; and the positive electrode slurry is applied onto the positive electrode current collector, followed by processes such as drying and cold pressing, to obtain the positive electrode plate.

[Negative electrode plate]

The negative electrode plate includes a negative electrode current collector and a negative electrode film layer disposed on at least one surface of the negative electrode current collector, where the negative electrode film layer

includes a negative electrode active material.

For example, the negative electrode current collector includes two opposite surfaces in its thickness direction, and the negative electrode film layer is disposed on either or both of the two opposite surfaces of the negative electrode current collector.

In some embodiments, the negative electrode current collector may be a metal foil current collector or a composite current collector. For example, a copper foil may be used as the metal foil. The composite current collector may include a polymer material matrix and a metal layer formed on at least one surface of the polymer material matrix. The composite current collector may be formed by forming a metal material (copper, copper alloy, nickel, nickel alloy, titanium, titanium alloy, silver, silver alloy, or the like) on the polymer material matrix (for example, matrices of polypropylene (PP), polyethylene terephthalate (PET), polybutylene terephthalate (PBT), polystyrene (PS), and polyethylene (PE)).

In some embodiments, the negative electrode active material may be a negative electrode active material well known in the art and used for batteries. For example, the negative electrode active material may include at least one of the following materials: artificial graphite, natural graphite, soft carbon, hard carbon, a silicon-based material, a tin-based material, and lithium titanate. The silicon-based material may be selected from at least one of elemental silicon, silicon-oxygen compound, silicon-carbon composite, silicon-nitrogen composite, and silicon alloy. The tin-based material may be selected from at least one of elemental tin, tin-oxygen compound, and tin alloy. However, this application is not limited to these materials, but may use other conventional materials that can be used as negative electrode active materials for batteries instead. One of these negative electrode active materials may be used alone, or more than two of them may be used in combination.

In some embodiments, the negative electrode film layer further optionally includes a binder. For example, the binder may be selected from at least one of styrene-butadiene rubber (SBR), polyacrylic acid (PAA), polyacrylic acid sodium (PAAS), polyacrylamide (PAM), polyvinyl alcohol (PVA), sodium alginate (SA), polymethacrylic acid (PMAA), and carboxymethyl chitosan (CMCS).

In some embodiments, the negative electrode film layer further optionally includes a conductive agent. For example, the conductive agent may be selected from at least one of superconducting carbon, acetylene black, carbon black, Ketjen black, carbon dots, carbon nanotubes, graphene, and carbon nanofiber.

In some embodiments, the negative electrode film layer further optionally includes other additives such as a thickener (for example, sodium carboxymethyl cellulose (CMC-Na)).

In some embodiments, the negative electrode plate may be prepared in the following manner: the foregoing constituents used for preparing the negative electrode plate, for example, the negative electrode active material, the conductive agent, the binder, and any other constituent, are dispersed in a solvent (for example, deionized water) to produce a negative electrode slurry; and the negative electrode slurry is applied onto the negative electrode current collector, followed by processes such as drying and cold pressing, to obtain the negative electrode plate.

[Separator]

In some embodiments, the secondary battery further includes a separator. The separator is not limited to a particular type in this application, and may be any well-known porous separator with good chemical stability and mechanical stability.

In some embodiments, material of the separator may be selected from at least one of glass fiber, non-woven fabric, polyethylene, polypropylene, and polyvinylidene fluoride. The separator may be a single-layer film or a multi-layer composite film, which is not particularly limited. When the separator is a multi-layer composite film, all layers may be made of the same or different materials, which is not particularly limited.

In some embodiments, the positive electrode plate, the negative electrode plate, and the separator may be made into an electrode assembly through winding or lamination.

In some embodiments, the secondary battery may include an outer package. The outer package may be used for packaging the electrode assembly and the electrolyte.

In some embodiments, the outer package of the secondary battery may be a hard shell, for example, a hard plastic shell, an aluminum shell, or a steel shell. The outer package of the secondary battery may alternatively be a soft pack, for example, a soft pouch. Material of the soft pack may be plastic. Polypropylene, polybutylene terephthalate, polybutylene succinate, and the like may be listed as the plastic.

The secondary battery is not limited to a particular shape in this application, and may be cylindrical, rectangular, or of any other shapes. For example, FIG. 1 shows a rectangular secondary battery 5 as an example.

In some embodiments, referring to FIG. 2, the outer package may include a housing 51 and a cover plate 53. The housing 51 may include a base plate and a side plate connected onto the base plate, and the base plate and the side plate enclose an accommodating cavity. The housing 51 has an opening communicating with the accommodating cavity, and the cover plate 53 can cover the opening to close the accommodating cavity. The positive electrode plate, the negative electrode plate, and the separator may be made into an electrode assembly 52 through winding or lamination. The

electrode assembly 52 is packaged in the accommodating cavity. The electrolyte infiltrates the electrode assembly 52. The secondary battery 5 may include one or more electrode assemblies 52, and persons skilled in the art may make choices according to actual requirements.

In some embodiments, the secondary battery may be assembled into a battery module, and the battery module may include one or more secondary batteries. The specific quantity may be chosen by persons skilled in the art according to use and capacity of the battery module.

FIG. 3 shows a battery module 4 as an example. Referring to FIG. 3, in the battery module 4, a plurality of secondary batteries 5 may be sequentially arranged in a length direction of the battery module 4. Certainly, the secondary batteries may alternatively be arranged in any other manners. Further, the plurality of secondary batteries 5 may be fixed by fasteners.

Optionally, the battery module 4 may further include a shell with an accommodating space, and the plurality of secondary batteries 5 are accommodated in the accommodating space.

In some embodiments, the battery module may be further assembled into a battery pack, and the battery pack may include one or more battery modules. The specific quantity may be chosen by persons skilled in the art according to use and capacity of the battery pack.

FIG. 4 and FIG. 5 show a battery pack 1 as an example. Referring toFIG. 4 and FIG. 5, the battery pack 1 may include a battery box and a plurality of battery modules 4 arranged in the battery box. The battery box includes an upper box body 2 and a lower box body 3. The upper box body 2 can cover the lower box body 3 to form an enclosed space for accommodating the battery modules 4. The plurality of battery modules 4 may be arranged in the battery box in any manner.

In addition, this application further provides an electric apparatus. The electric apparatus includes at least one of the secondary battery, the battery module, or the battery pack provided in this application. The secondary battery, the battery module, or the battery pack may be used as a power source of the electric apparatus or an energy storage unit of the electric apparatus. The electric apparatus may include a mobile device (for example, a mobile phone or a notebook computer), an electric vehicle (for example, a battery electric vehicle, a hybrid electric vehicle, a plug-in hybrid electric vehicle, an electric bicycle, an electric scooter, an electric golf vehicle, or an electric truck), an electric train, a ship, a satellite system, an energy storage system, or the like, but is not limited thereto.

The secondary battery, the battery module, or the battery pack may be selected for the electric apparatus based on requirements for using the electric apparatus.

FIG. 6 shows an electric apparatus as an example. The electric apparatus is a battery electric vehicle, a hybrid electric vehicle, a plug-in hybrid electric vehicle, or the like. To satisfy requirements of the electric apparatus for high power and high energy density of the secondary battery, a battery pack or a battery module may be used.

[Examples]

The following describes examples of this application. The examples described below are illustrative and only used for explaining this application, and cannot be construed as limitations on this application. Examples whose technical solutions or conditions are not specified are made in accordance with technical solutions or conditions described in literature in the field or made in accordance with product instructions. The reagents or instruments used are all conventional products that are commercially available if no manufacturer is indicated.

**Example 1**

(1) Preparation of electrolyte: In a glove box full of argon (water content < 10 ppm and oxygen content < 1 ppm), appropriate amounts of a first additive lithium sulfamate and a second additive lithium difluorophosphate were added to a mixed solvent of ethylene carbonate (EC) and ethyl methyl carbonate (EMC) (EC:EMC = 3:7 W%/W%), the mixture was uniformly mixed, and then $LiPF_6$ was slowly added. After the lithium salt was completely dissolved, an electrolyte was obtained, where a mass content of the lithium sulfamate was 10 ppm, a mass content of the lithium difluorophosphate was 0.5%, a molar concentration of the $LiPF_6$ was 1 M, and a mass content of water in the electrolyte was ≤ 20 ppm.

(2) Preparation of positive electrode plate: A positive electrode active material $LiNi_{0.5}Co_{0.2}Mn_{0.3}O_2$, a conductive agent Super P, and a binder polyvinylidene fluoride (PVDF) were added to N-methylpyrrolidone (NMP) to produce a positive electrode slurry. A solid content of the positive electrode slurry was 50wt%, and a mass ratio of $LiNi_{0.5}Co_{0.2}Mn_{0.3}O_2$, Super P, and PVDF in the solid was 8:1:1. The positive electrode slurry was applied onto a current collector aluminum foil, and the resulting current collector was dried at 85°C, followed by cold pressing, trimming, cutting, slitting, and drying in vacuum at 85°C for 4 h, to obtain a positive electrode plate.

(3) Preparation of negative electrode plate: A negative electrode active material graphite, a conductive agent Super P, a thickener CMC, and a binder styrene-butadiene rubber (SBR) were uniformly mixed in deionized water to produce a negative electrode slurry. A solid content of the negative electrode slurry was 30wt%, and a mass ratio of graphite, Super P, CMC, and the binder styrene-butadiene rubber (SBR) in the solid was 80:15:3:2. The negative electrode slurry was applied onto a current collector copper foil, and the resulting current collector was dried at 85°C, followed by cold pressing, trimming, cutting, slitting, and drying in vacuum at 120°C for 12 h, to obtain a negative electrode plate.
(4) Separator: A 16 μm thick polyethylene film (PE) was used.
(5) Preparation of secondary battery: The prepared positive electrode plate, separator, and negative electrode plate were stacked in sequence so that the separator was located between the positive electrode plate and the negative electrode plate for separation. Then, the resulting stack was wound to obtain a bare cell, tabs were welded, and the bare cell was placed in an outer package. The prepared electrolyte was injected into the dried cell, followed by packaging, standing, formation, shaping, and capacity testing, to prepare a secondary battery (the pouch lithium-ion battery had a thickness of 4.0 mm, a width of 60 mm, and a length of 140 mm).

The preparation method of the secondary battery in Examples 2 to 19 and Comparative Examples 1 and 2 was similar to that in Example 1, with different parameters being detailed in Table 1 and the rest being the same as that in Example 1.

**Table 1: Parameters of Examples 1 to 19 and Comparative Examples 1 and 2**

| | First additive | Mass content a of first additive | Second additive | Mass content b of second additive | Lithium salt | b/a |
|---|---|---|---|---|---|---|
| Example 1 | Lithium sulfamate | 10 ppm | Lithium difluorophosphate | 0.50% | $LiPF_6$ | 500.0 |
| Example 2 | Lithium sulfamate | 0.10% | Lithium difluorophosphate | 0.50% | $LiPF_6$ | 5.0 |
| Example 3 | Lithium sulfamate | 0.50% | Lithium difluorophosphate | 0.50% | $LiPF_6$ | 1.0 |
| Example 4 | Lithium sulfamate | 1% | Lithium difluorophosphate | 0.50% | $LiPF_6$ | 0.5 |
| Example 5 | Lithium sulfamate | 3% | Lithium difluorophosphate | 0.50% | $LiPF_6$ | 0.2 |
| Example 6 | Lithium sulfamate | 0.10% | Lithium difluorophosphate | 100 ppm | $LiPF_6$ | 0.1 |
| Example 7 | Lithium sulfamate | 0.10% | Lithium difluorophosphate | 0.10% | $LiPF_6$ | 1.0 |
| Example 8 | Lithium sulfamate | 0.10% | Lithium difluorophosphate | 0.50% | $LiPF_6$ | 5.0 |
| Example 9 | Lithium sulfamate | 0.10% | Lithium difluorophosphate | 1% | $LiPF_6$ | 10.0 |
| Example 10 | Lithium sulfamate | 0.10% | / | / | $LiPF_6$ | / |
| Example 11 | Aminosulfonyl fluoride | 0.10% | Lithium difluorophosphate | 0.50% | $LiPF_6$ | 5.0 |
| Example 12 | Lithium sulfamate | 0.50% | Lithium tetrafluoroborate | 0.50% | $LiPF_6$ | 1.0 |
| Example 13 | Lithium sulfamate | 0.50% | Lithium difluoro(oxalato)borate | 2% | $LiPF_6$ | 4.0 |
| Example 14 | Lithium sulfamate | 1% | Lithium difluorophosphate | 0.50% | $LiPF_6$ + LiFSI | 0.5 |

(continued)

| | First additive | Mass content a of first additive | Second additive | Mass content b of second additive | Lithium salt | b/a |
|---|---|---|---|---|---|---|
| Example 15 | Lithium sulfamate | 3.50% | Lithium difluorophosphate | 0.50% | $LiPF_6$ | 0.1 |
| Example 16 | Lithium sulfamate | 0.50% | Lithium tetrafluoroborate | 2.30% | $LiPF_6$ | 4.6 |
| Example 17 | Lithium sulfamate | 500 ppm | Lithium difluorophosphate | 0.50% | $LiPF_6$ | 10.0 |
| Example 18 | Lithium sulfamate | 0.10% | Lithium difluorophosphate | 0.30% | $LiPF_6$ | 3.0 |
| Example 19 | Lithium sulfamate | 0.10% | Lithium difluorophosphate | 1.20% | $LiPF_6$ | 12.0 |
| Comparative Example 1 | / | / | / | / | $LiPF_6$ | / |
| Comparative Example 2 | / | / | Lithium difluorophosphate | 0.50% | / | / |

**Battery test**

(1) Cycling performance test of secondary battery

With the ambient temperature adjusted to 25°C, the secondary battery was charged to 4.25 V at a constant current of 1C, then charged to a current of 0.05C at a constant voltage of 4.25 V, left standing for 10 min, and discharged to 2.8 V at 1C. A discharge capacity C0 at that time was recorded. The secondary battery was subjected to 300 cycles according to the foregoing charging and discharging processes, and a discharge capacity after 300 cycles was recorded as C1. The cycling capacity retention rate of the secondary battery was calculated according to the following formula.

$$\text{Cycling capacity retention rate of the secondary battery} = 100\% \times C0/C1$$

(2) High-temperature storage gas generation test of secondary battery

At 25°C, the secondary battery was charged to 4.25 V at a constant current of 1C, and then charged to a current of 0.05C at a constant voltage of 4.25 V. The volume of the battery cell was measured by using the drainage method and recorded as V1. The moisture on the surface of the battery cell was wiped off, and the secondary battery was placed in a 70°C thermostat and maintained at that temperature for 10 days (during which the battery did not operate). The battery was taken out and cooled to 25°C, and the volume of the battery cell was measured again by using the drainage method and recorded as V2. The volume swelling rate of the battery cell was calculated according to the following formula.

$$\text{Volume swelling rate of the battery cell} = 100\% \times (V2 - V1)/V1$$

(3) High-temperature storage service life test of secondary battery

At 25°C, the secondary battery was charged to 4.25 V at a constant current of 1C, then charged to a current of 0.05C at a constant voltage of 4.25 V, left standing for 10 min, and discharged to 2.8 V at 1C. A discharge capacity D0 at that time was recorded. The secondary battery was placed in a 60°C thermostat and maintained at that temperature for 60 days (during which the battery did not operate), and then taken out and cooled to 25°C. The secondary battery was discharged to 2.8 V at a constant current of 1C, then charged to 4.25 V at a constant current of 1C, charged to 0.05C at a constant voltage of 4.25 V, left standing for 10 min, and discharged to 2.8 V at a constant current of 1C. A discharge capacity D1 was recorded. The high-temperature storage capacity retention rate of the secondary battery was calculated according to the following formula.

High-temperature storage capacity retention rate of the secondary battery = 100% × D1/D0

(4) Impedance test

At 25°C, the secondary battery was left standing for 10 min, charged to 4.25 V at 1C, then charged to 0.05C at a constant voltage of 4.25 V, left standing for 30 min, discharged at 1C for 30 min, and left standing for 60 min. A voltage V1 at the end of the standing was recorded. Then, the battery was discharged at 4C for 30s, and a voltage V2 at the end of the discharging was recorded. The impedance of the battery at 50% SOC was calculated according to the following formula, where I = 4C.

$$R = (V1 - V2)/I$$

(5) Conductivity test of electrolyte

The conductivity of the electrolyte at room temperature (25°C) was tested according to HG-T 4067-2015.
Test results: The conductivity of the electrolyte in Examples 1 to 19 was within the range of 7 mS/cm to 15 mS/cm.

(6) Low-temperature freezing point test of electrolyte

After the electrolyte was injected into the battery cell, the battery cell was sealed. The battery cell was clamped using a swelling force testing sensor and then placed in a high and low temperature box, and the temperature was gradually decreased. The change in the swelling force of the battery cell was synchronously monitored. When the electrolyte solidified, the swelling force of the battery cell increased sharply, and the temperature corresponding to the inflection point at which the swelling force increased was recorded. This temperature was the freezing point of the electrolyte.
Test results: The low-temperature freezing point of the electrolyte in Examples 1 to 19 at standard atmospheric pressure was within the range of -80°C to - 20°C.
The results of items (1) to (4) are shown in Table 2.

**Table 2: Performance test results of secondary batteries in Examples 1 to 19 and Comparative Examples 1 and 2**

| | Cycling capacity retention rate | Volume swelling rate of battery cell | High-temperature storage capacity retention rate | Impedance (mohm) |
|---|---|---|---|---|
| Example 1 | 92.30% | 18% | 90.10% | 160 |
| Example 2 | 97.10% | 7.80% | 95.30% | 53 |
| Example 3 | 98.80% | 3.60% | 96.60% | 57 |
| Example 4 | 97.50% | 3.00% | 95.60% | 62 |
| Example 5 | 95.80% | 1.20% | 94.30% | 136 |
| Example 6 | 95.00% | 9.20% | 93.70% | 140 |
| Example 7 | 97.00% | 8.40% | 95.70% | 86 |
| Example 8 | 97.50% | 5.30% | 96.40% | 71 |
| Example 9 | 97.80% | 5.00% | 96.50% | 42 |
| Example 10 | 93.10% | 15.00% | 91.20% | 200 |
| Example 11 | 97.30% | 5.50% | 96.30% | 73 |
| Example 12 | 98.50% | 4.00% | 96.20% | 64 |
| Example 13 | 96.40% | 3.70% | 95.00% | 78 |
| Example 14 | 99.10% | 3.00% | 98.30% | 53 |
| Example 15 | 88.30% | 1.00% | 86.30% | 220 |
| Example 16 | 90.30% | 4.00% | 88.70% | 18 |

(continued)

| | Cycling capacity retention rate | Volume swelling rate of battery cell | High-temperature storage capacity retention rate | Impedance (mohm) |
|---|---|---|---|---|
| Example 17 | 96.60% | 8.30% | 94.50% | 51 |
| Example 18 | 97.20% | 7.30% | 96.00% | 80 |
| Example 19 | 96.00% | 9% | 94.20% | 56 |
| Comparative Example 1 | 80.30% | 25% | 80.00% | 180 |
| Comparative Example 2 | 84.20% | 23% | 82.20% | 190 |

It can be learned from Tables 1 and 2 that:
As compared with Comparative Examples 1 and 2, the batteries prepared with the electrolytes in Examples 1 to 19 of this application have higher cycling capacity retention rate, lower battery cell volume swelling rate, and higher high-temperature storage capacity retention rate.

As compared with Example 15, in Examples 1 to 5, 8, 11, 14, and 17 of this application, the mass content of the first additive in the electrolyte is 10 ppm to 3%, and the batteries prepared have higher cycling capacity retention rate, higher high-temperature storage capacity retention rate, and lower battery cell impedance.

As compared with Example 10, in Examples 2, 6 to 9, 11, 18, and 19 of this application, both the first additive and the second additive are used, and the battery cells prepared have lower impedance and lower volume swelling rate and the batteries prepared have higher cycling capacity retention rate and high-temperature storage capacity retention rate.

As compared with Example 16, in Example 12 of this application, the mass content of the second additive in the electrolyte is 100 ppm to 2%, and the battery prepared has higher cycling capacity retention rate and high-temperature storage capacity retention rate.

As compared with Examples 1, 5, 6, and 15, in Examples 2 to 4, 7 to 9, 11, 13, 14, 17, and 18 of this application, the ratio b/a of the mass content of the second additive to the mass content of the first additive is within the range of 0.5 to 10, and the batteries prepared have higher cycling capacity retention rate, higher high-temperature storage capacity retention rate, and lower battery cell impedance.

The above indicates that the batteries prepared with the electrolyte of this application have higher cycling capacity retention rate, lower battery cell volume swelling rate, higher high-temperature storage capacity retention rate, and lower battery cell impedance.

It should be noted that this application is not limited to the foregoing embodiments. The foregoing embodiments are merely examples, and embodiments having substantially the same constructions and having the same effects as the technical idea within the scope of the technical solutions of this application are all included in the technical scope of this application. In addition, without departing from the essence of this application, various modifications made to the embodiments that can be conceived by persons skilled in the art, and other manners constructed by combining some of the constituent elements in the embodiments are also included in the scope of this application.

## Claims

**1.** An electrolyte, comprising a first additive represented by formula (I);

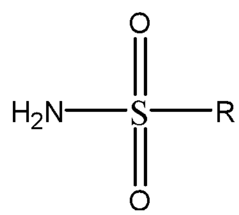

(I)

wherein
R is selected from one or more of halogen and MO-; and M is selected from alkali metal.

**2.** The electrolyte according to claim 1, wherein

R is selected from one or more of F and MO-; and/or M is selected from one or more of lithium, sodium, potassium, rubidium, and cesium;
optionally, M is selected from one or more of lithium, sodium, and potassium; and
more optionally, M is lithium.

**3.** The electrolyte according to claim 1 or 2, wherein

the first additive is selected from one or more of lithium sulfamate, aminosulfonyl fluoride, sodium sulfamate, and potassium sulfamate; and
optionally, the first additive is selected from one or more of lithium sulfamate and aminosulfonyl fluoride.

**4.** The electrolyte according to any one of claims 1 to 3, wherein a mass content of the first additive in the electrolyte is less than or equal to 3.5%, optionally 10 ppm to 3.5%, more optionally 10 ppm to 3%, further optionally 500 ppm to 1%, and more further optionally 0.1% to 1%.

**5.** The electrolyte according to any one of claims 1 to 4, further comprising a second additive represented by formula (II) or formula (III),

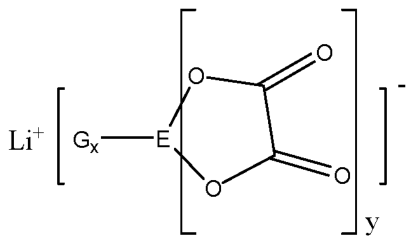

(II)

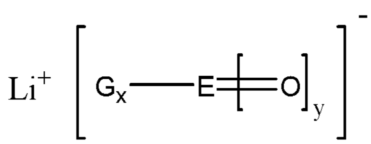

(III)

wherein

Es in formula (II) and formula (III) are each independently selected from one or more of phosphorus and boron; and
Gs in formula (II) and formula (III) are each independently selected from halogen; and
when E is phosphorus, x is 2 and y is 2;
when E in formula (II) is boron, x is 4 and y is 0, or x is 2 and y is 1; and
when E in formula (III) is boron, x is 4 and y is 0.

**6.** The electrolyte according to claim 5, wherein
Gs in formula (II) and formula (III) are each independently F.

**7.** The electrolyte according to claim 5 or 6, wherein

the second additive is selected from one or more of lithium difluorophosphate, lithium difluorobis(oxalato) phosphate, lithium tetrafluoroborate, and lithium difluoro(oxalato)borate; and
optionally, the second additive is selected from one or more of lithium difluorophosphate, lithium tetrafluoroborate, and lithium difluoro(oxalato)borate.

**8.** The electrolyte according to any one of claims 5 to 7, wherein a mass content of the second additive in the electrolyte is less than or equal to 2.3%, optionally 100 ppm to 2.3%, more optionally 100 ppm to 2%, and further optionally 0.1% to 1%.

**9.** The electrolyte according to any one of claims 5 to 8, wherein a ratio of a mass content of the second additive in the electrolyte to a mass content of the first additive in the electrolyte is 0.1 to 500, optionally 0.5 to 12, and more optionally 0.5 to 10.

**10.** The electrolyte according to any one of claims 1 to 9, further comprising an electrolytic salt, wherein the electrolytic salt is selected from one or more of $LiPF_6$, lithium bis(fluorosulfonyl)imide, lithium fluorosulfonate, lithium fluorosulfonyl(trifluoromethylsulfonyl)imide, and lithium bis(pentafluoroethylsulfonyl)imide, and optionally selected from one or more of $LiPF_6$ and lithium bis(fluorosulfonyl)imide.

**11.** A battery, comprising the electrolyte according to any one of claims 1 to 10.

**12.** An electric apparatus, comprising the battery according to claim 11.

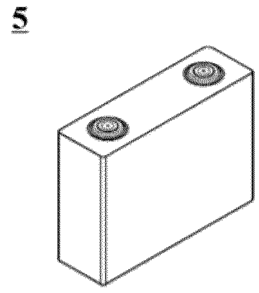


FIG. 1

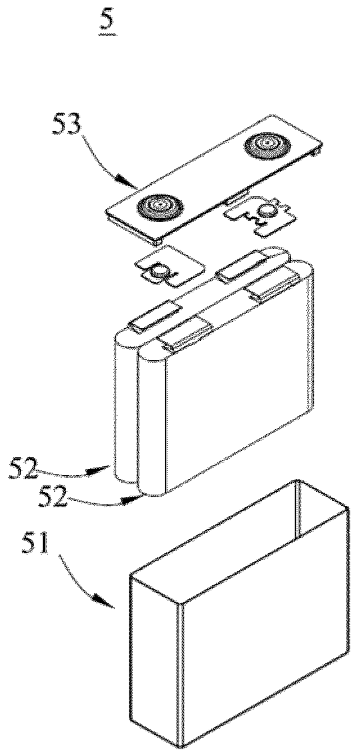


FIG. 2

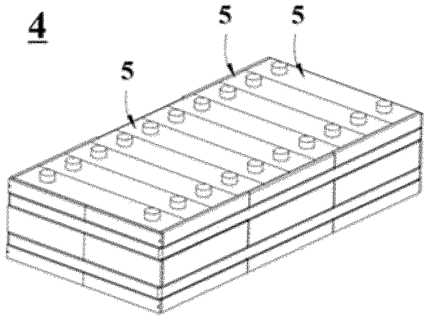


FIG. 3

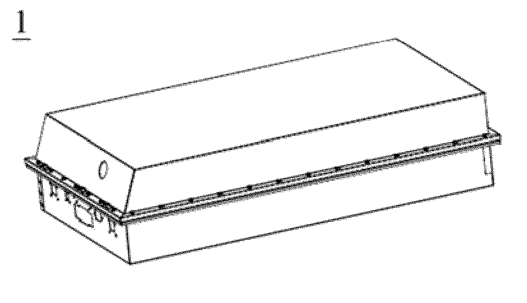


FIG. 4

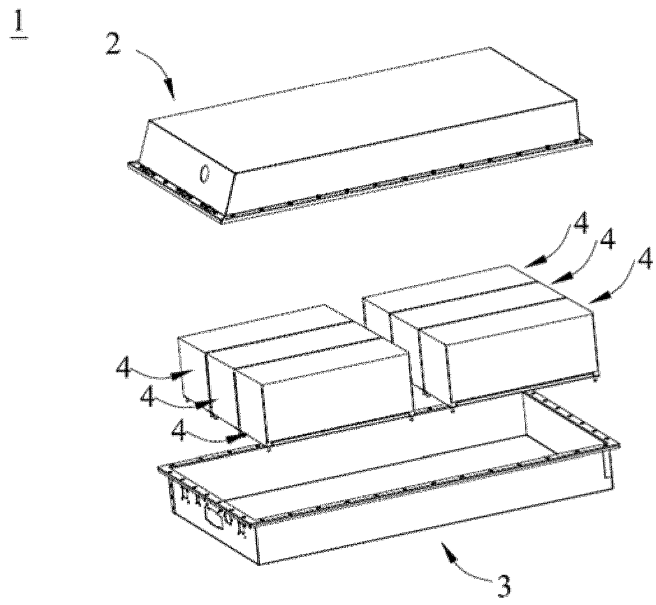


FIG. 5

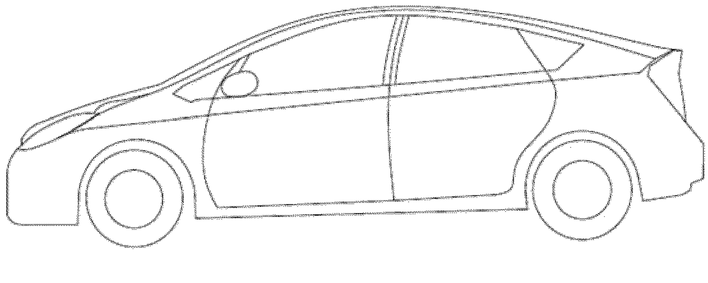

FIG. 6

**INTERNATIONAL SEARCH REPORT**

International application No. **PCT/CN2023/070096**

**A. CLASSIFICATION OF SUBJECT MATTER**

H01M10/0567(2010.01)i； H01M10/052(2010.01)n；H01M6/16(2006.01)n；H01G9/035(2006.01)n；H01G11/64(2013.01)n

According to International Patent Classification (IPC) or to both national classification and IPC

**B. FIELDS SEARCHED**

Minimum documentation searched (classification system followed by classification symbols)

IPC：H01M,H01G

Documentation searched other than minimum documentation to the extent that such documents are included in the fields searched

Electronic data base consulted during the international search (name of data base and, where practicable, search terms used)

CNTXT, ENTXTC, WPABSC, ENTXT, WPABS, DWPI: 电池, 电解液, 添加剂, 氨基磺酸钾, 氨基磺酸钠, 氨基磺酸锂, 氨基磺酰氟, 双草酸硼酸锂, 二氟双草酸磷酸锂, 二氟磷酸锂, 四氟硼酸锂, 二氟草酸硼酸锂

**C. DOCUMENTS CONSIDERED TO BE RELEVANT**

| Category* | Citation of document, with indication, where appropriate, of the relevant passages | Relevant to claim No. |
|---|---|---|
| X | CN 113508485 A (DAIKIN INDUSTRIES LTD.) 15 October 2021 (2021-10-15)<br>description, paragraphs [0019]-[0308] and [0668] | 1-12 |
| X | CN 113474932 A (DAIKIN INDUSTRIES LTD.) 01 October 2021 (2021-10-01)<br>description, paragraphs [0232]-[0483], and claims 7-9 | 1-12 |
| X | CN 113490674 A (DAIKIN INDUSTRIES LTD.) 08 October 2021 (2021-10-08)<br>description, paragraphs [0276]-[0554], and claims 7-9 | 1-12 |
| X | WO 2022172951 A1 (DAIKIN INDUSTRIES, LTD.) 18 August 2022 (2022-08-18)<br>description, paragraphs [0214]-[0461], and claims 7-10 | 1-12 |
| X | WO 2022168584 A1 (MITSUI CHEMICALS INC.) 11 August 2022 (2022-08-11)<br>description, paragraphs [0009]-[0554], and claims 1-3 and 9 | 1-4, 10-12 |
| A | CN 114665166 A (ZHANG HANSHENG) 24 June 2022 (2022-06-24)<br>entire document | 1-12 |
| A | CN 115377516 A (GUANGZHOU ZHUOYUE ELECTRIC ENERGY TECHNOLOGY CO., LTD.) 22 November 2022 (2022-11-22)<br>entire document | 1-12 |

☐ Further documents are listed in the continuation of Box C. ☑ See patent family annex.

* Special categories of cited documents:
- "A" document defining the general state of the art which is not considered to be of particular relevance
- "D" document cited by the applicant in the international application
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **10 August 2023** | **16 August 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | Telephone No. |

Form PCT/ISA/210 (second sheet) (July 2022)

**INTERNATIONAL SEARCH REPORT**
**Information on patent family members**

International application No.
**PCT/CN2023/070096**

| Patent document cited in search report | Publication date (day/month/year) | Patent family member(s) | Publication date (day/month/year) |
|---|---|---|---|
| CN 113508485 A | 15 October 2021 | US 2021391597 A1 | 16 December 2021 |
| | | EP 3920302 A1 | 08 December 2021 |
| | | KR 20210131398 A | 02 November 2021 |
| | | JPWO 2020175511 A1 | 09 December 2021 |
| | | JP 7116351 B2 | 10 August 2022 |
| | | WO 2020175511 A1 | 03 September 2020 |
| CN 113474932 A | 01 October 2021 | KR 20210130776 A | 01 November 2021 |
| | | US 2021399344 A1 | 23 December 2021 |
| | | JPWO 2020175522 A1 | 23 December 2021 |
| | | JP 7201943 B2 | 11 January 2023 |
| | | EP 3933999 A1 | 05 January 2022 |
| | | WO 2020175522 A1 | 03 September 2020 |
| CN 113490674 A | 08 October 2021 | EP 3932928 A1 | 05 January 2022 |
| | | EP 3932928 A4 | 28 December 2022 |
| | | JPWO 2020175513 A1 | 03 September 2020 |
| | | JP 7277819 B2 | 19 May 2023 |
| | | US 2022149433 A1 | 12 May 2022 |
| | | KR 20210133246 A | 05 November 2021 |
| | | WO 2020175513 A1 | 03 September 2020 |
| WO 2022172951 A1 | 18 August 2022 | JP 2022122846 A | 23 August 2022 |
| | | JP 7168897 B2 | 10 November 2022 |
| | | TW 202243313 A | 01 November 2022 |
| WO 2022168584 A1 | 11 August 2022 | TW 202240963 A | 16 October 2022 |
| CN 114665166 A | 24 June 2022 | None | |
| CN 115377516 A | 22 November 2022 | None | |

Form PCT/ISA/210 (patent family annex) (July 2022)